(19) Europäisches Patentamt
European Patent Office
Office européen des brevets

(11) EP 0 546 404 B1

(12) **EUROPEAN PATENT SPECIFICATION**

(45) Date of publication and mention
of the grant of the patent:
**31.07.1996 Bulletin 1996/31**

(51) Int Cl.6: **G02B 27/00**

(21) Application number: **92120365.9**

(22) Date of filing: **28.11.1992**

(54) **Optical design of laser scanner to reduce thermal sensitivity**

Optische Vorrichtung eines Laser-Abtastgerätes zur Verringerung thermischer Empfindlichkeit

Structure optique d'un dispositif de balayage laser pour réduire la sensibilité thermique

(84) Designated Contracting States:
**DE FR GB**

(30) Priority: **12.12.1991 US 806953**

(43) Date of publication of application:
**16.06.1993 Bulletin 1993/24**

(73) Proprietor: **EASTMAN KODAK COMPANY**
**Rochester, New York 14650-2201 (US)**

(72) Inventors:
 • **Kessler, David, c/o Eastman Kodak Company**
 **Rochester, New York 14650-2201 (US)**

 • **Harrigan, Michael Edward**
 **c/o Eastman Kodak Company**
 **Rochester, New York 14650-2201 (US)**

(74) Representative: **Schmidt, Peter, Dipl.-Ing. et al**
**KODAK Aktiengesellschaft**
**Patentabteilung**
**70323 Stuttgart (DE)**

(56) References cited:
 **US-A- 4 621 890      US-A- 5 054 866**

 • **RESEARCH DISCLOSURE no. 288, April 1988,**
 **New York, NY, USA, pp. 225, disclosed**
 **anonymously 28853 : "Optical Scan Angular**
 **Velocity Magnification System"**

## Description

The present invention relates in general to laser imaging systems and relates in particular to an optical design of a laser diode scanner which reduces thermal sensitivity.

The use of laser diodes in digital printers or scanners often requires an optical system with high magnification from laser to writing medium. The light emitting region of laser diodes is not usually circular, but has more of an elliptical or rectangular shape, often .5-2 $\mu$m diameter in its small section, and 2 to 6 $\mu$m in the large section. In a laser printer this spot is imaged into a pixel on a photosensitive medium. The dimensions of the pixel frequently are 40 to 160 $\mu$m , so a magnification from the optical system of 20 to 100 times is not uncommon.

It is well known that if the position of the object surface along the optical axis of a conventional optical system shifts by a small amount, the image plane shift along the optical axis is approximately given by the square of the transverse magnification times the object shift. So if the magnification is 40, a shift of 1 $\mu$m of the object, or laser, produces 1.6mm of image pixel focal shift. Since the shifted pixel is out of focus, its size on the photosensitive medium is different. Changes in size of the image pixel can lead to undesirable artifacts in a digital image. If the temperature changes, causing thermal expansion and contraction, the space between the laser and first line component of a digital printer can change by several $\mu$m.

As disclosed in US-A-4,948,221, a common practice to alleviate this problem is to design an athermal head for the laser diode which keeps the laser at the focal point of the collimator lens as the temperature changes. This is done by using dissimilar materials so that when the temperature changes, the laser position is effectively maintained with respect to the collimator lens so that the "object distance" of the optical system does not change.

As disclosed in published European Patent Application 0323850, another method is to actively compensate for image pixel motion by sensing its motion and actively adjusting a lens position to compensate for the motion.

Other patents of interest do not solve the thermal sensitivity problem. Thus, US-A-4,818,049, discloses a laser imaging system which uses "apparently" collimated light at the image plane. "Apparently" collimated light has no known technical definition but probably refers to the light emanating from a lens which has an extended source at its focus. This patent, 4,818,049, primarily addresses the problem of conveying laser light over large distances. US-A-4,621,890, discloses a laser system which solves the problem of a laser beam emission angle changing over time. The patent discloses a gas laser which produces a highly collimated beam and does not address the problem of thermal shift of a laser diode. US-A-4,915,484; US-A-4,917,483; and US-A-4,998,790, disclose laser scanners using diverging lasers with collimators but do not disclose a solution to the laser position sensitivity problem.

According to the present invention, there is provided a laser scanner as defined in Claim 1 in which the pixel size of a laser beam at the image plane is kept constant despite thermal shift of the laser diode. According to an aspect of the present invention, an optical system for a laser diode has a second focal plane which is located at the image receiving plane of the laser imaging system. According to the present invention, a laser scanner is provided which has an optical system from laser diode to image plane whose first principal focus is located at the laser diode. In this case, the light forming the imaging pixel is collimated in the image space and the $e^{-2}$ laser beam pixel diameter is independent of the motion of the laser diode.

FIG. 1 is a block diagram of a laser diode imaging system according to the present invention.

FIGS. 2 and 3 are diagrammatic views useful in explaining the present invention.

Referring now to the Figures, there will be described a laser diode imaging system in which the pixel size at the image plane is kept constant by utilizing an optical system which has its second focal plane at the image plane. A constant size pixel is produced even though the location of the laser diode shifts with respect to the first optical lens due to thermal expansion or contraction.

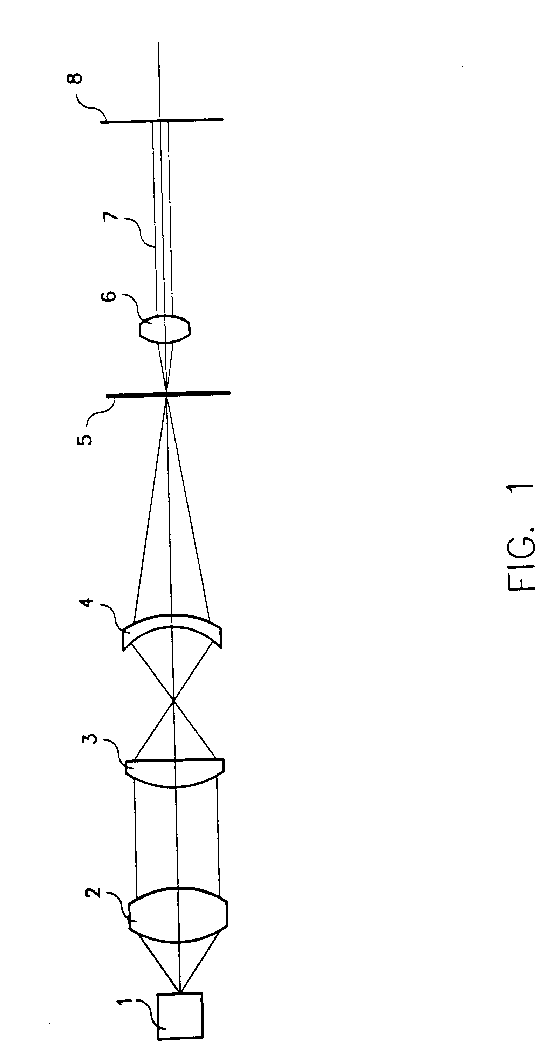

FIG. 1 shows a block diagram of a laser diode imaging system according to the present invention. As shown, laser diode 1 produces a diverging laser beam which is collimated by first collimating lens 2. The collimated beam is focused by lens 3 and reimaged onto optical scanner 5 by converging lens 4. Scanner 5 may be a rotating multifaceted polygon mirror, an oscillating mirror, or a holographic deflector. Second collimating lens 6 collimates the laser beam reflected from scanner 5, into a beam 7 forming a pixel at the image plane 8, which is located at the second focal plane of the optical system, the laser diode 1 being located at the first focal plane of the optical system. At image plane 8 may be a photosensitive medium in a laser printer, or an information medium (x-ray film, a exposed storage phosphor) in a laser scanner. Components 2, 3, 4 and 6 generally include more than one optical element (lens).

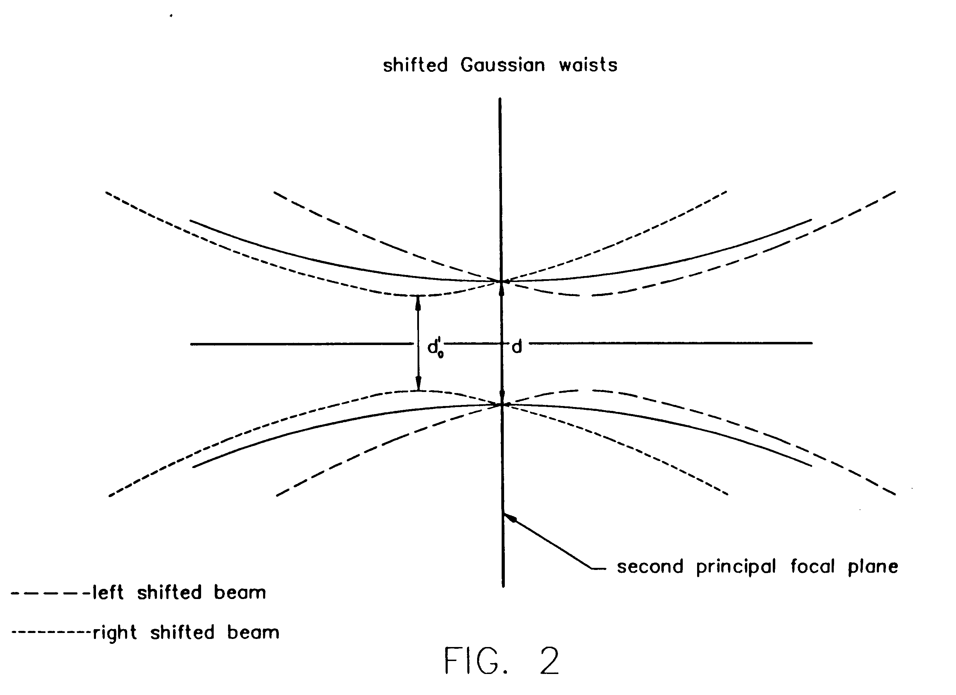

Referring now to FIG. 2, there is illustrated how the property of locating the image at the second focal plane of the optical system keeps the laser beam diameter fixed. The solid lines shows a Gaussian laser beam whose waist (the minimum size as measured at the $e^{-2}$ intensity level) is located at the second focus. The two dashed curves show what happens when the waist $d_o$ shifts to the left or right as a result of the laser diode 1 moving left or right because of thermal contraction or expansion. As can be seen, the $e^{-2}$ beam diameter, d, does not change, although the waist, $d_o$ does get smaller.

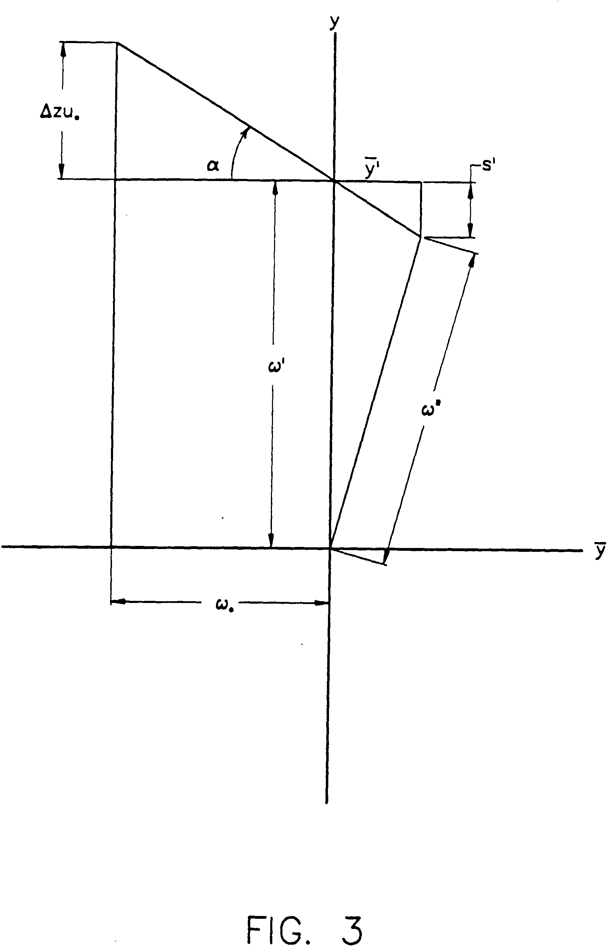

Referring to FIG. 3, there will be described a proof that while the $e^{-2}$ pixel size is constant under the conditions of laser diode 1 being at the first principal focus and image plane 8 being at the nominal and principal focus. Also, the pixel size variation is small for errors in each of these parameters and is computed below.

The following definitions are used:

$\Delta z =$      focal shift error of the laser from first principal focus

$\Delta z' =$      focal shift error of the image plane from second principal focus

$\omega' =$      nominal $e^{-2}$ waist of image pixel

$\omega_o =$      nominal $e^{-2}$ waist of laser

$\omega'' =$      actual $e^{-2}$ radius of image pixel when both focal shift errors are present

Let $\Delta y$ be the change in the divergence ray height on the collimating lens when the laser shifts by $\Delta z$. If the laser $e^{-2}$ divergence angle is $u_o$, then $\Delta y = \Delta z u_o$, as shown in the figure. Let $\bar{y}$, as shown on the figure, be the change in the waist ray height at the image when the image shifts by $\Delta z'$. Since the angle of the waist ray into the image is $\omega_o/f$ (f is the focal length of the whole optical system), $\bar{y}, = \Delta z' \omega_o/f$.

From the figure it can be seen that:

$$\omega'' = \sqrt{(\omega' - s')^2 + \bar{y}'^2}$$

From the figure we also see that $s' = \bar{y}, \tan\alpha = \bar{y}, \dfrac{\Delta z u_o}{\omega_o}$

Substituting for $\bar{y}$, from above,

$$s' = \frac{\Delta z' \omega_o \Delta z u_o}{f\, \omega_o} = \frac{\Delta z' \Delta z u_o}{f}$$

Now the nominal pixel waist radius, $\omega'$, is given by $fu_o$, so s' can be written in terms of $\omega'$ instead of $u_o$:

$$s' = \frac{\Delta z' \Delta z \omega'}{f^2}$$

Substituting for $\bar{y}$, in the radical and factoring out $\omega'$, we get:

$$\omega'' = \omega' \sqrt{\left(1 - \frac{\Delta z' \Delta z}{f^2}\right) + \left(\frac{\Delta z' \omega_o}{f\omega'}\right)^2} = \omega' \sqrt{\left(1 - \frac{\Delta z' \Delta z_2}{f^2}\right) + \left(\frac{\Delta z' \omega_o}{f^2 u_o}\right)^2}$$

The quantity is $\dfrac{\omega_o}{u_o}$ the Rayleigh distance, $z_R$, which is characteristic of the laser. So the equation can be written:

$$\omega'' = \omega' \sqrt{\left(1 - \frac{\Delta z' \Delta z \omega'}{f^2}\right) + \left(\frac{\Delta z' z_R}{f^2}\right)^2}$$

To get some idea of the insensitivity, suppose the laser has the following characteristics: $u_o = .489$ radians, and $\omega_o = .000435$ mm, so $z_R = .00178$ mm. If $\omega' = .06$ mm, then f must be .123 mm. If the laser moves .005 mm and the image is .25 mm from the waist, we find that the value for $\omega''$ decreases or increases by 8.3% depending on whether $\Delta z' \Delta z$ is positive or negative. This laser motion of .005 mm is 5 times larger than what is typically required of a good thermal head. The image plane error of .25 mm is also somewhat forgiving compared to values of .05 mm which might be needed for prior art solutions.

The disclosed laser imaging system has application in laser printers and laser scanning systems. An advantage of the invention is that it allows practical laser scanners using higher magnification to be used. A further advantage is the elimination or simplification of expensive athermal laser diode assemblies.

## Claims

1. A laser scanner comprising:

   a laser diode (1) for producing a laser beam;
   an optical system (2,3,4,6) including a scanning optical assembly (5);
   a photosensitive or an information recording medium (8), characterized in that
   said laser diode (1) is located at the first principal focal plane of said optical system (2,3,4,6) and in that said photosensitive medium or said information medium (8) is located at the second principal focal plane of said optical system (2,3,4,6).

2. The laser scanner of claim 1, wherein said scanning optical assembly (5) being located near an internal focal plane of said optical system (2,3,4,6).

3. The laser scanner of claim 2, wherein said scanning optical assembly (5) is a multifaceted polygon scanner.

4. The laser scanner of claim 2, wherein said scanning optical assembly (5) is a multifaceted holographic deflecting element.

**Patentansprüche**

1. Laserscanner mit

   einer Laserdiode (1) zum Erzeugen eines Laserstrahls,
   einem optischen System (2, 3, 4, 6) mit einer optischen Abtastanordnung (5), und
   einem lichtempfindlichen oder einem Informationen aufzeichnenden Medium (8),
   **dadurch gekennzeichnet**, daß
   die Laserdiode (1) an der ersten Hauptbrennebene des optischen Systems (2, 3, 4, 6) und das lichtempfindliche oder das Informationen aufzeichnende Medium (8) an der zweiten Hauptbrennebene des optischen Systems (2, 3, 4, 6) angeordnet ist.

2. Laserscanner nach Anspruch 1, dadurch gekennzeichnet, daß die optische Abtastanordnung (5) in der Nähe einer inneren Brennebene des optischen Systems (2, 3, 4, 6) angeordnet ist.

3. Laserscanner nach Anspruch 2, dadurch gekennzeichnet, daß die optische Abtastanordnung (5) ein Polygonscanner mit einer Vielzahl von Facetten ist.

4. Laserscanner nach Anspruch 2, dadurch gekennzeichnet, daß die optische Abtastanordnung (5) ein holografisches Ablenkelement mit einer Vielzahl von Facetten ist.

**Revendications**

1. Dispositif de balayage à laser comprenant :

   une diode laser (1) destinée à produire un faisceau laser,
   un système optique (2, 3, 4, 6) comprenant un ensemble optique de balayage (5),
   un support photosensible ou d'enregistrement d'informations (8), caractérisé en ce que
   ladite diode laser (1) est située au niveau du premier plan focal principal dudit système optique (2, 3, 4, 6) et
   en ce que ledit support photosensible ou ledit support d'informations (8) est situé au niveau du second plan focal principal dudit système optique (2, 3, 4, 6).

2. Dispositif de balayage à laser selon la revendication 1, dans lequel ledit ensemble optique de balayage (5) est situé à proximité d'un plan focal interne dudit système optique (2, 3, 4, 6).

3. Dispositif de balayage à laser selon la revendication 2, dans lequel ledit ensemble optique de balayage (5) est un dispositif de balayage polygonal à multi-facettes.

4. Dispositif de balayage à laser selon la revendication 2, dans lequel ledit ensemble optique de balayage (5) est un élément de déflexion holographique à multi-facettes.

FIG. 1

EP 0 546 404 B1

shifted Gaussian waists

left shifted beam
right shifted beam

FIG. 2

FIG. 3